(19) **Europäisches Patentamt European Patent Office Office européen des brevets**

(11) **EP 4 742 332 A1**

(12) **EUROPEAN PATENT APPLICATION**
published in accordance with Art. 153(4) EPC

(43) Date of publication:
**13.05.2026 Bulletin 2026/20**

(21) Application number: **24835998.6**

(22) Date of filing: **28.06.2024**

(51) International Patent Classification (IPC):
**H01M 8/0284** (2016.01)   **F16J 15/10** (2006.01)
**H01M 8/10** (2016.01)   **H01M 8/0276** (2016.01)

(52) Cooperative Patent Classification (CPC):
**Y02E 60/50**

(86) International application number:
**PCT/JP2024/023660**

(87) International publication number:
**WO 2025/009485 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.07.2023 JP 2023111758**

(71) Applicant: **Toagosei Co., Ltd.**
**Minato-ku**
**Tokyo 105-8419 (JP)**

(72) Inventors:
• **MIYAZAWA, Yuki**
  **Tokyo 105-8419 (JP)**
• **IWATSUKI, Keigo**
  **Tokyo 105-8419 (JP)**
• **ONABE, Takayuki**
  **Tokyo 105-8419 (JP)**

(74) Representative: **Rüger Abel Patentanwälte PartGmbB**
**Webergasse 3**
**73728 Esslingen a. N. (DE)**

(54) **GASKET MEMBER FOR FUEL CELL**

(57) A gasket member for a fuel cell, the gasket member including: a substrate layer; an d adhesive layers arranged on both sides of the substrate layer, in which the substrate layer c contains polyimide, and has a stress at break of 50 N/mm$^2$ or more and an elongation at break of 50% or more.

**Description**

TECHNICAL FIELD

The present disclosure relates to a gasket member for a fuel cell.

BACKGROUND ART

In recent years, hot-melt adhesive compositions have come to be used as adhesive films or sheets (hereinafter, collectively referred to as "adhesive members") for chemical batteries such as lithium ion batteries and fuel cells incorporated in notebook computers, smartphones, tablets, automobiles and the like, and physical batteries such as solar batteries and capacitors. In order to bond metal substrates such as iron, aluminum, titanium, other metals, and alloys thereof, which are used for substrates of constituent members of these batteries, it is known that a relatively good adhesive strength is obtained when a hot-melt adhesive composition containing an olefinic thermoplastic resin modified with an acid (hereinafter, also referred to as "acid-modified polyolefin") as a main component is used.

As for battery applications, for example, the fuel cell is operated in a humidified atmosphere in order to improve proton conductivity of an electrolyte membrane, and since water is generated by a power generation reaction, a member constituting the fuel cell is required to have high hydrolysis resistance. In addition, since power density can be improved by increasing an operating temperature of the fuel cell, the fuel cell is required to be used in a high-temperature environment (for example, 100°C or higher) from the viewpoint of downsizing the fuel cell.

As a technique for improving hydrolysis resistance of a gasket member, among members constituting a fuel cell, in the high-temperature environment, for example, Patent Literature 1 describes a gasket member for a solid polymer fuel cell, the gasket member including a laminate including at least a substrate layer and adhesive layers arranged on both sides of the substrate layer, in which the laminate has a retention rate of elongation at break of 60% or more after being left standing in water at 120°C for 300 hours. Patent Literature 2 describes a gasket member for a solid polymer fuel cell, the gasket member including a laminate including at least a substrate layer and adhesive layers arranged on both sides of the substrate layer, in which the substrate layer contains polyphenylsulfone.

PRIOR ART DOCUMENT

PATENT DOCUMENT

Patent Literature 1: WO 2022/172983 A
Patent Literature 2: WO 2022/172985 A

SUMMARY OF INVENTION

TECHNICAL PROBLEM

An object of an embodiment of the present disclosure is to provide a gasket member for a fuel cell having excellent adhesion durability in an environment at a high temperature and in the presence of moisture.

SOLUTION TO PROBLEMS

Means for solving the above problems include the following aspects.

[1] A gasket member for a fuel cell, the gasket member comprising: a substrate layer and adhesive layers arranged on both sides of the substrate layer, in which the substrate layer contains polyimide, and has a stress at break of 50 N/mm$^2$ or more and an elongation at break of 50 % or more.
[2] The gasket member for a fuel cell according to [1], in which the substrate layer has a retention rate of elongation at break of 50% or more after being held in water at 120°C for 3000 hours.
[3] The gasket member for a fuel cell according to [1] or [2], in which the substrate layer has a retention rate of stress at break of 100% or less after being held in water at 120°C for 3000 hours.
[4] The gasket member for a fuel cell according to any one of [1] to [3], in which a primer layer is further disposed between the substrate layer and the adhesive layer.

EFFECTS OF INVENTION

According to an embodiment of the present disclosure, it is possible to provide a gasket member for a fuel cell, the gasket member having excellent adhesion durability in an environment at a high temperature and in the presence of moisture.

DESCRIPTION OF EMBODIMENTS

Hereinafter, a gasket member for a fuel cell according to the present disclosure will be described in detail. The following description may be made based on a representative embodiment of the gasket member for a fuel cell according to the present disclosure, but the gasket member for a fuel cell according to the present disclosure is not limited to such embodiments and can be implemented with appropriate modifications within the scope of the object of the present disclosure.

In the present disclosure, a numerical range represented by "to" means a range including numerical values described before and after "to" as a lower limit value and an upper limit value.
In the present disclosure, "high temperature" means 100°C or higher.
In the present disclosure, "environment where moisture exists" is, for example, an environment where an object is held in water.

In the numerical range described stepwise in the present disclosure, the upper limit value or the lower limit value described in a certain numerical range may be replaced with an upper limit value or a lower limit value of another numerical range. In the present disclosure, the upper limit value or the lower limit value described in a certain numerical range may be replaced with a value shown in Examples.

In the present disclosure, unless otherwise specified, a molecular weight of a compound having a molecular weight distribution is a weight average molecular weight (Mw).
In the present disclosure, a combination of two or more preferred aspects is a more preferred aspect.

[Gasket member for fuel cell]

A gasket member for a fuel cell (hereinafter, also simply referred to as a "gasket member") according to the present disclosure includes: a substrate layer; and adhesive layers arranged on both sides of the substrate layer, in which the substrate layer contains polyimide, and has a stress at break of 50 N/mm$^2$ or more and an elongation at break of 50% or more.

The substrate layer is an intermediate layer, and the adhesive layer is a surface layer.

A primer layer may be further disposed between the substrate layer and the adhesive layer. The primer layer is a layer that contributes to improvement of adhesive strength between the substrate layer and the adhesive layer.

Here, in the gasket member for a fuel cell, the surface layer is a layer disposed on an upper surface and a lower surface, and the intermediate layer is a layer other than the surface layer.

Typical layer configurations of the gasket member include a three-layer structure of adhesive layer/substrate layer/adhesive layer and a five-layer structure of adhesive layer/primer layer/substrate layer/primer layer/adhesive layer.

It is presumed that since the gasket member according to the present disclosure is configured to include the substrate layer and the adhesive layers arranged on the both sides of the substrate layer, and the substrate layer contains polyimide, and has a stress at break of 50 N/mm$^2$ or more and an elongation at break of 50% or more, hydrolysis resistance is improved even in an environment at a high temperature and in the presence of moisture, and adhesion durability is excellent. In Patent Literature 1 and Patent Literature 2, there is no description focusing on the fact that the substrate layer contains polyimide.

In the present disclosure, the adhesion durability is evaluated by peeling strength after a test piece is prepared from a bonded body obtained by bonding the adhesive layer of the gasket member to an adherend (specifically, a SUS304 plate having a thickness of 0.1 mm), and the test piece is held in water at 120°C for 500 hours. Details of an evaluation method and conditions of the adhesion durability will be described in Examples described later.

(Substrate layer)

The substrate layer contains polyimide. The substrate layer is excellent in heat resistance and hydrolysis resistance by containing polyimide. Further, when the primer layer is disposed, excellent adhesiveness with the primer layer is obtained.

The polyimide is a polymer containing an imide bond in a molecule thereof.

A total amount of the polyimide in the substrate layer is preferably 60 mass% or more, and more preferably 70 mass% or more. The upper limit of the total amount of the polyimide in the substrate layer is not particularly limited, but in an embodiment of the present invention, the total amount of the polyimide in the substrate layer is preferably 99.9 mass% or less, more preferably 98 mass% or less, and still more preferably 95 mass% or less.

The substrate layer can contain a polymer (hereinafter, also referred to as "other polymer A") other than polyimide for the purpose of heat resistance, hydrolysis resistance, easy moldability, and the like.

Examples of the other polymer A include phenol resin, urea resin, melamine resin, benzoguanamine resin, alkyd resin, unsaturated polyester resin, vinyl ester resin, diallyl terephthalate resin, silicone resin, urethane resin, furan resin, ketone resin, xylene resin, benzoxazine resin, active ester resin, aniline resin, cyanate ester resin, styrene-maleic anhydride (SMA) resin, polyethylene resin, polypropylene resin, polystyrene resin, rubber-modified polystyrene resin, acrylonitrile-butadiene-styrene (ABS) resin, acrylonitrile-styrene (AS) resin, polymethyl methacrylate resin, acrylic resin, polyvinyl chloride resin, polyvinylidene chloride resin, polyethylene terephthalate resin, ethylene vinyl alcohol resin, cellulose acetate resin, ionomer resin, polyacrylonitrile resin, polyacetal resin, polybutylene terephthalate resin, polylactic acid resin, polyphenylene ether resin, modified polyphenylene ether resin, polycarbonate resin, polyarylate resin, polyether ether ketone resin, polyketone resin, liquid crystal polyester resin, fluororesin, syndiotactic polystyrene resin, cyclic polyolefin resin, $\alpha$-olefin copolymer, propylene-based elastomer, polyisoprene, hydrogenated polyisoprene, polybutadiene, cycloolefin polymer, cycloolefin copolymer, polyamine, polyamide, melamine resin, urea resin, styrene-based thermoplastic resin, hydroxyl group-modified polyolefin resin, glycidyl methacrylate-modified polyolefin resin, polyamideimide resin, polyphenylsulfone resin, polyethersulfone resin, polysulfone resin, polyamide resin, polyphenylene sulfide resin, polyetherimide resin, polyamideimide resin, and polymethacrylimide resin.

In the case of containing the other polymer A, the content of the other polymer in the substrate layer may be, for example, 0.1 mass% or more, preferably 1 mass% or more, more preferably 3 mass% or more, and particularly preferably 5 mass% or more. When the content of the other polymer A is in such a range, the improvement effect of the gasket member is enhanced by the other polymer A.

In the case of containing the other polymer A, the content of the other polymer A in the substrate layer is preferably 50 mass% or less, more preferably 35 mass% or less, and particularly preferably 20 mass% or less. When the content of the other polymer A is in such a range, the gasket member can be further improved in heat resistance, hydrolysis resistance, and easy moldability.

The stress at break of the substrate layer is preferably 100 N/mm$^2$ or more, and more preferably 150 N/mm$^2$ or more. An upper limit value of the stress at break is, for example, 500 N/mm$^2$.

The elongation at break of the substrate layer is preferably 50% or more, and more preferably 60% or more. An upper limit value of the elongation at break is, for example, 200 %.

In the substrate layer after water-immersion at 120°C for 3000 hours, the retention rate of elongation at break is preferably 50% or more, more preferably 60% or more, and still more preferably 70% or more. When the retention rate of elongation at break is 50% or more, the adhesion durability is further improved.

In addition, the substrate layer has a retention rate of stress at break of preferably 100% or less, more preferably 95% or less, and still more preferably 90% or less after being held in water at 120°C for 3000 hours. When the retention rate of stress at break is 100% or less, the adhesion durability is further improved.

In the present disclosure, the retention rate of elongation at break and the retention rate of stress at break are measured by the following methods.

The substrate layer is peeled off from the gasket member. The stress at break (an initial stress at break) and the elongation at break (an initial elongation at break) of the peeled sample are measured. In addition, the peeled sample is immersed in water at 120°C and held for 3000 hours, and then the stress at break and the elongation at break are measured. Obtained measured values are divided by the initial stress at break and the initial elongation at break to calculate the retention rate of stress at break and the retention rate of elongation at break. The stress at break and the elongation at break are measured by punching the sample into a No. 3 dumbbell shape described in JIS K 6251 and pulling it under conditions of a tensile speed of 30 mm/min and a gauge length of 20 mm using a tensile tester. Test environment is set to 23°C, and an average value of two measurements is adopted.

Retention rate of stress at break (%) = (stress at break after water-immersion at 120°C for 3000 hours = initial stress at break) $\times$ 100

Retention rate of elongation at break (%) = (elongation at break after water-immersion at 120 °C for 3000 hours $\div$ initial elongation at break) $\times$ 100

Softening point of the substrate layer is preferably 175°C or higher, more preferably 180°C or higher, and particularly preferably 185°C or higher. When the softening point is within this range, the heat resistance of the gasket member is improved.

Storage elastic modulus of the substrate layer at 160°C is preferably 500MPa or more, more preferably 700MPa

or more, and particularly preferably 1000MPa or more. The stor age elastic modulus of the substrate layer at 170°C is preferably 500MPa or more, more pref erably 700MPa or more, and particularly preferably 1000MPa or more. When the storage ela stic modulus in the temperature range is 500MPa or more, deformation and damage of the ga sket member due to thermocompression bonding during bonding can be prevented.

From the viewpoint of the heat resistance, a thickness change rate of the substrate l ayer in a compression creep test is preferably 30% or less, more preferably 25% or less, and particularly preferably 20% or less.

From the viewpoint of the heat resistance, a thermal change rate of the substrate lay er in a thermal shrinkage test is preferably 0.50% or less, more preferably 0.30% or less, and particularly preferably 0.20% or less.

Here, in the present disclosure, the softening point and the storage elastic modulus are values obtained using a tensile viscoelastic apparatus (DMS6100 manufactured by Hitach i High-Tech Science Corporation). Specifically, an object to be measured is heated from roo m temperature to 250°C at a frequency of 1 Hz and a heating rate of 2°C/min, and changes in storage elastic modulus, loss elastic modulus, and tan$\delta$ depending on temperature are record ed. In the present disclosure, the softening point means a temperature at which a value of tan $\delta$ shows a maximum value.

Melt flow rate of the substrate layer is preferably 1 g/10min or more, and more pref erably 2 g/10min or more. The melt flow rate of the substrate layer is preferably 50 g/10min or less, and more preferably 30 g/10min or less. When the melt flow rate of the substrate laye r is less than or equal to the lower limit value, melt viscosity is high and sheet formation is di fficult, and when the melt flow rate of the substrate layer is greater than or equal to the upper limit value, melt tension is too low and the sheet formation also tends to be difficult.

The melt flow rate of the substrate layer is a value measured in accordance with JIS K7210:2014 (ISO 1133 2011). The melt flow rate of the substrate layer was measured at a re sin temperature of 300°C and a load of 2.16 kg.

The substrate layer may further contain an additive selected from the group consisti ng of an antioxidant, an ultraviolet absorber, a filler, reinforcing fibers, a mold release agent, a processing aid, a flame retardant, a plasticizer, a nucleating agent, an antistatic agent, a pig ment, a dye, a foaming agent, and combinations thereof.

(Primer layer)

From the viewpoint of improving the adhesion durability, the primer layer preferab ly contains an acid-modified polyolefin or a polycarbonate diol, and more preferably contain s the acid-modified polyolefin.

The content of the acid-modified polyolefin and the polycarbonate diol in the prim er layer is preferably 50 mass% or more, more preferably 70 mass% or more, and particularl y preferably 90 mass% or more, and may be 100 mass% with respect to a total amount of the primer layer. When the contents of the acid-modified polyolefin and the polycarbonate diol a re in such ranges, an effect of improving the adhesion durability of the primer layer is enhanc ed.

In the present disclosure, the acid-modified polyolefin is obtained by graft-modifyi ng an unmodified polyolefin (hereinafter, also simply referred to as "polyolefin") with an aci d compound selected from the group consisting of an unsaturated carboxylic acid, an unsatur ated carboxylic acid anhydride, and a combination thereof.

In the acid-modified polyolefin, examples of monomer units constituting the polyol efin include monomer units derived from a monomer selected from the group consisting of $\alpha$ -olefins such as ethylene, propylene, 1-butene, 1-pentene, 1-hexene, and 4-methyl-1-pentene, diene-based monomers such as butadiene, isoprene, and chloroprene, aromatic vinyl compou nds such as styrene, and combinations thereof.

Polypropylene is particularly preferable as the polyolefin. Polypropylene is a poly mer containing a propylene unit as a main component, and may be a homopolymer or a copol ymer, or may be an alloy or a blend with another polymer component. When the polypropyle ne is the copolymer or the alloy, the content of the propylene unit is preferably 60 mass% or more, and more preferably 75 mass% or more.

Specific examples of the polypropylene include homopolymers such as amorphous polypropylene and crystalline polypropylene, copolymers containing propylene as the main c omponent, halogen-modified products such as chlorinated polypropylene, and alloys or blend s of the polypropylene with other polymers. In an aspect, the polypropylene is preferably a c opolymer containing propylene as the main component, and examples of the copolymer cont aining propylene as the main component include a propylene-1-butene copolymer.

Examples of other monomer units constituting the copolymer or alloy of polypropy lene include: monomer units derived from a monomer selected from the group consisting of $\alpha$-olefins such as ethylene, 1-butene, 1-pentene, 1-hexene, and 4-methyl-1-pentene; diene-bas ed monomers such as butadiene, isoprene, chloroprene, and diene monomers; aromatic vinyl compounds such as vinyl acetate, (meth)acrylic acid ester, and styrene; and combinations the reof. The number of carbon atoms in the monomer is preferably 2 to 10, and more preferably 2 to 5.

A method for producing the polyolefin includes a known production method using a polymerization catalyst. The polymerization catalyst includes a Ziegler catalyst and a metal locene catalyst, and a polymerization method includes slurry polymerization and gas phase p olymerization.

The acid compound used for producing the acid-modified polyolefin is selected fro m the group consisting of the unsaturated carboxylic acid, the unsaturated carboxylic acid an hydride, and the combination thereof.

The unsaturated carboxylic acid is a compound having an ethylenic double bond an d a carboxylic acid group in the same molecule, and examples thereof include various unsatu rated monocarboxylic acids and unsaturated dicarboxylic acids. These acid compounds may be used alone or in combination of two or more types thereof.

Specific examples of the unsaturated monocarboxylic acid include acrylic acid, met hacrylic acid, crotonic acid, and isocrotonic acid.

Specific examples of the unsaturated dicarboxylic acid include maleic acid, fumari c acid, itaconic acid, citraconic acid, nadic acid, and endic acid.

The unsaturated carboxylic acid anhydride is a compound having an ethylenic doub le bond and a carboxylic acid anhydride group in the same molecule, and examples thereof in clude acid anhydrides of the unsaturated dicarboxylic acid. Specific examples of the acid anh ydrides of the unsaturated dicarboxylic acid include maleic anhydride, fumaric anhydride, ita conic anhydride, citraconic anhydride, nadic anhydride, and endic anhydride.

Among them, maleic acid and maleic anhydride are preferably used, and maleic an hydride is particularly preferably used, because a modification effect is high. That is, the acid -modified polyolefin contained in the primer layer is preferably a maleic anhydride acid-mod ified polyolefin.

As a method of graft modification, a known method can be employed. Examples th ereof include a method in which an acid compound is graft-reacted with a polyolefin in a mol ten state or a solution state in the presence of a radical polymerization initiator such as an org anic peroxide or an aliphatic azo compound.

Temperature of the graft reaction is preferably 80°C to 160°C when the graft reacti on is performed in a solution state, and 150°C to 300°C when the graft reaction is performed in a molten state. In each of the solution state and the molten state, a reaction rate increases a t the lower limit value or more of the reaction temperature range, decrease in the molecular w eight of the resin can be suppressed at the upper limit value or less of the reaction temperatur e range, and a mechanical strength of the resulting acid-modified polyolefin can be maintaine d.

The radical polymerization initiator to be used may be selected from commercially available organic peroxides in consideration of the reaction temperature and the like.

When a part of the acid compound used for graft modification is unreacted, it is pre ferable to remove the unreacted acid compound by a known method such as distillation under reduced pressure in order to suppress an adverse effect on the adhesive strength.

An amount of the acid compound grafted to the acid-modified polyolefin is prefera bly 0.2 mass% or more, more preferably 0.4 mass% or more, and particularly preferably 0.6 mass% or more. When the amount of the acid compound grafted is in such a range, adhesive ness of the primer layer can be enhanced.

The amount of the acid compound grafted to the acid-modified polyolefin is prefer ably 10 mass% or less, more preferably 5 mass% or less, and particularly preferably 2 mass % or less. When the amount of the acid compound grafted is in such a range, deterioration in physical properties due to the decrease in the molecular weight can be suppressed.

In the present specification, the amount of the acid compound grafted to the acid-m odified polyolefin is defined by the following formula from an acid value of the acid-modifie d polyolefin.

$$\text{Graft amount (mass\%)} = \text{acid value} \times M \times 100/(1000 \times 56.1 \times V)$$

In the formula, M and V are defined by the following formula.

M = (molecular weight of acid compound) + (number of unsaturated groups in acid compoun d) $\times$ 1.008

V = valence of acid group (however, when an acid anhydride group is contained, the valence is valence of the acid group when the acid anhydride group is completely hydrolyzed)

The acid value indicates the number of milligrams of potassium hydroxide required to neutra lize an acid contained in 1 g of a sample, and is measured in accordance with JIS K 0070:199 2.

In the primer layer, melting point of the acid-modified polyolefin is preferably 50° C or higher, and more preferably 60°C or higher. When the melting point of the acid-modifie d polyolefin is in such a range, the heat resistance of the primer layer and the adhesive streng th at a high temperature can be further improved.

In the primer layer, the melting point of the acid-modified polyolefin is preferably 160°C or lower, and more preferably 100°C or lower. When the melting point of the acid-mo dified polyolefin is in such a range, good thermocompression bonding properties can be obtai ned, and the adhesion durability at a low temperature can be improved.

Note that in the present disclosure, the melting point means a temperature at a peak of an endothermic peak generated in a process of once holding at 180°C for several minutes, then cooling to 0°C, and then raising the temperature to 200°C by 10°C per minute using a d ifferential scanning calorimeter (DSC).

The weight average molecular weight (Mw) of the acid-modified polyolefin is pref erably 10,000 to 300,000, more preferably 30,000 to 250,000, and still more preferably 50,00 0 to 200,000.

As the acid-modified polyolefin, a commercially available product may be used, an d examples of the commercially available product include "MODIC" manufactured by Mitsu bishi Chemical Corporation, "ADMER" and "UNISTOLE" manufactured by Mitsui Chemica ls, Inc., "TOYOTAC" manufactured by Toyobo Co., Ltd., "UMEX" manufactured by Sanyo Chemical Industries, Ltd., "REXPEARL EAA" and "REXPEARL ET" manufactured by Japa n Polyethylene Corporation, "PRIMACOL" manufactured by Dow Chemical Company, "NU CLEL" manufactured by Du Pont Mitsui Polychemicals Co., Ltd., and "BONDINE" manufac tured by Arkema.

Examples of the polycarbonate diol include a reaction product of a low molecular weight diol and/or a bisphenol such as bisphenol A with a carbonic acid dialkyl ester such as ethylene carbonate or carbonic acid dibutyl ester.

Examples of the low molecular weight diol include ethylene glycol, propylene glyc ol, cyclohexanedimethanol, neopentyl glycol, 3-methyl-1,5-pentanediol, and 1,6-hexanediol.

As the polycarbonate diol, a commercially available product may be used, and exa mples of the commercially available product include Duranol T5650J, Duranol T5652, and D uranol G3452 (manufactured by Asahi Kasei Corporation), ETERNACOLL UH-50 and ETE RNACOLL UH-100 (manufactured by UBE Corporation), and BENEBiOL HS0830B and B ENEBiOL NL1010DB (manufactured by Mitsubishi Chemical Corporation).

The primer layer can contain a polymer (hereinafter, also referred to as "other poly mer B") other than the acid-modified polyolefin and the polycarbonate diol described above f or the purpose of adhesiveness, hydrolysis resistance, heat resistance, and the like. When the primer layer contains the other polymer B, the other polymer B may be one type or two or m ore types.

Examples of the other polymer B include phenol resin, urea resin, melamine resin, benzoguanamine resin, alkyd resin, unsaturated polyester resin, vinyl ester resin, diallyl terep hthalate resin, silicone resin, urethane resin, furan resin, ketone resin, xylene resin, thermoset ting polyimide resin, benzoxazine resin, active ester resin, aniline resin, cyanate ester resin, s tyrene-maleic anhydride (SMA) resin, polyethylene resin, polypropylene resin, polystyrene r esin, rubber-modified polystyrene resin, acrylonitrile-butadiene-styrene (ABS) resin, acrylon itrile-styrene (AS) resin, polymethyl methacrylate resin, acrylic resin, polyvinyl chloride resi n, polyvinylidene chloride resin, polyethylene terephthalate resin, ethylene vinyl alcohol resi n, cellulose acetate resin, ionomer resin, polyacrylonitrile resin, polyamide resin, polyacetal r esin, polybutylene terephthalate resin, polylactic acid resin, polyphenylene ether resin, modif ied polyphenylene ether resin, polycarbonate resin, polysulfone resin, polyphenylene sulfide resin, polyetherimide resin, polyethersulfone resin, polyarylate resin, thermoplastic polyimid e resin, polyamideimide resin, polyetheretherketone resin, polyketone resin, liquid crystal pol yester resin, fluororesin, syndiotactic polystyrene resin, cyclic polyolefin resin, $\alpha$-olefin copo lymers, propylene-based elastomers, polyisoprene, hydrogenated polyisoprene, polybutadien e, cycloolefin polymers, cycloolefin copolymers, polyamines, polyamides, melamine resin, u rea resin, styrene-based thermoplastic resin, hydroxyl group-modified polyolefin resin, and g lycidyl methacrylate-modified polyolefin resin.

When the other polymer B is contained, the content of the other polymer B in the p rimer layer is preferably 0.1 mass% or more, more preferably 1 mass% or more, and particul arly preferably 5 mass% or more with respect to the total amount of the primer layer. When t he content of the other polymer B is in such a range, the improving effect by the other polym er B is enhanced.

When the other polymer B is contained, the content of the other polymer B in the p rimer layer is preferably 50 mass% or less, more preferably 35 mass% or less, and particularl y preferably 20 mass% or less with respect to the total amount of the primer layer. When the addition amount is in such a range, the multilayer sheet can be further improved in adhesiven ess, hydrolysis resistance, and heat resistance.

The primer layer preferably further contains a curing agent. The curing agent is pre ferably a compound capable of forming a crosslinked structure between acidic polyolefins or polycarbonate diols. From the viewpoint of improving the adhesion durability, examples of t he curing agent include an isocyanate compound, an epoxy compound, a carbodiimide comp ound, and an oxazoline compound, and at least one selected from the isocyanate compound a nd the epoxy compound is more preferable.

The isocyanate compound is preferably a compound having two or more isocyanat e groups (-NCO) (that is, a polyfunctional isocyanate compound), and examples thereof inclu de bifunctional diisocyanate, trifunctional or higher isocyanate having a structure such as an adduct structure, an isocyanurate structure, a biuret structure, or the like. As the isocyanate, a commercially available product may be used, and examples thereof incl ude Duranate TPA-100, Duranate T4900-70B, Duranate MFA-75B, Duranate MHG80B, and Duranate 21S-75E (manufactured by Asahi Kasei Corporation), and TAKENATE A-3, TAK ENATE A-50, TAKENATE 500, TAKENATE 600, STABiO D-370N, and STABiO D-376 N (manufactured by Mitsui Chemicals, Inc.).

Examples of the epoxy compound include: bisphenol-type epoxy resins such as bis phenol A type epoxy resin (different from hydrogenated bisphenol A type epoxy resin) and b isphenol F type epoxy resin; hydrogenated bisphenol-type epoxy resin; novolac-type epoxy r esin; biphenyl-type epoxy resin; stilbene-type epoxy resin; hydroquinone-type epoxy resin; n aphthalene-skeleton-type epoxy resin; tetraphenylolethane-type epoxy resin; trishydroxyphen ylmethane-type epoxy resin; dicyclopentadienephenol-type epoxy resin; alicyclic epoxy resin s such as 3',4'-epoxycyclohexylmethyl-3,4-epoxycyclohexanecarboxylate and 1,2-epoxy-4-(2 -oxiranyl)cyclohexane adduct of 2,2-bis(hydroxymethyl)-1-butanol; polyglycidyl esters of polybasic acids such as diglycidyl ester of hexahydrophthalic anhydride; glycidyl ethers such as sorbitol polyglycidyl ether, sorbitan polyglycidyl ether, pentaerythritol polyglycidyl ether, trimethylolpropane polyglycidyl ether, polypropylene glycol diglycidyl ether, diglycerol polyglycidyl ether, glycerol polyglycidyl ether, hexanediol diglycidyl ether, hydrogenated bisphenol A diglycidyl ether, and cyclohexanedimethanol diglycidyl ether; diene polymer-type epoxy resins such as polybutadiene and polyisoprene; glycidylamine-type epoxy resins such as tetraglycidyldiaminodiphenylmethane, tetraglycidylbisaminomethylcyclohexane, diglycidylaniline, and tetraglycidylmetaxylylenediamine; and heterocycle-containing epoxy resins such as triazine and hydantoin.

As the epoxy compound, a commercially available product may be used, and examples thereof include EPICLON HP7200, EPICLON HP4700, and EPICLON HP4710 (manufactured by DIC Corporation), jER828 and jER157S70 (manufactured by Mitsubishi Chemical Corporation), JP-100 and JP-200 (manufactured by Nippon Soda Co., Ltd.), EPPN-501H and NC-7000 (manufactured by Nippon Kayaku Co., Ltd.), and TETRAD-C and TETRAD-X (manufactured by MITSUBISHI GAS CHEMICAL COMPANY, INC.).

An addition amount of the curing agent can be appropriately determined according to the type and content of the acid-modified polyolefin or polycarbonate diol, the type and content of the other polymer B, and the like. The curing agent may be used alone or in combination of two or more types thereof.

When the isocyanate compound is used in the primer layer, an addition amount of the isocyanate compound is preferably 0.1 mass% to 50 mass%, more preferably 5 mass% to 40 mass%, and still more preferably 10 mass% to 35 mass% with respect to the content of the acid-modified polyolefin. In the above range, the adhesion durability of the multilayer sheet is improved, and shape stability tends to be easily obtained.

When the epoxy compound is used in the primer layer, an addition amount of the epoxy compound is preferably 0.1 mass% to 40 mass%, more preferably 1 mass% to 30 mass%, and still more preferably 5 mass% to 20 mass% with respect to the content of the acid-modified polyolefin. In the above range, the adhesion durability of the multilayer sheet is improved, and overcuring tends to be easily suppressed.

An additive (hereinafter, also referred to as "additive X") selected from an imidazole compound, dioctyltin laurate, an amine compound, a phosphorus compound, or the like may be added to the primer layer from the viewpoint of curability. The additive X may be a catalyst added from the viewpoint of accelerating reaction of the curing agent.

An addition amount of the additive X can be appropriately determined according to the type and use amount of the curing agent, the type and use amount of the acid-modified polyolefin, and the like. The additive X may be used alone or in combination of two or more types thereof.

The primer layer may further contain an additive selected from the group consisting of an antioxidant, an ultraviolet absorber, a filler, reinforcing fibers, a mold release agent, a processing aid, a flame retardant, a plasticizer, a nucleating agent, an antistatic agent, a pigment, a dye, a foaming agent, and combinations thereof.

<Adhesive layer>

The adhesive layer is a layer that exhibits adhesiveness to the adherend. The adhesive layer is preferably a layer containing at least one selected from polyethylene, polypropylene, an ethylene-propylene copolymer, a styrene-based thermoplastic elastomer, polyester, polyamide, and the acid-modified polyolefin, and more preferably a layer containing the acid-modified polyolefin.

In the acid-modified polyolefin contained in the adhesive layer, examples of the monomer unit constituting the polyolefin include monomer units derived from a monomer selected from the group consisting of α-olefins such as ethylene, propylene, 1-butene, 1-pentene, 1-hexene and 4-methyl-1-pentene, diene-based monomers such as butadiene, isoprene, and chloroprene, aromatic vinyl compounds such as styrene, and combinations thereof. The number of carbon atoms in the monomer is preferably 2 to 10, and more preferably 2 to 5.

Among them, a polyolefin selected from the group consisting of a polymer blend of polyethylene and polypropylene, an ethylene-propylene copolymer, and a combination thereof is preferable because it has a high adhesive strength to the adherend.

The polyethylene is a polymer containing an ethylene unit as the main component, and may be a homopolymer or a copolymer. In the case of the copolymer, the content of the ethylene unit in the polyethylene is preferably 50 mass% or more, and may be 70 mass% or more. Specific examples of the polyethylene include homopolymers such as low density polyethylene, high density polyethylene, and linear low density polyethylene, copolymers such as an ethylene-diene monomer copolymer, an ethylene-vinyl acetate copolymer, an ethylene-acrylic acid ester copolymer, and an ethylene-methacrylic acid ester copolymer, and halogen-modified products such as chlorinated polyethylene.

The polypropylene is a polymer containing the propylene unit as the main component, and may be a homopolymer or a copolymer. In the case of the copolymer, the content of the propylene unit in the polypropylene is preferably 50 mass% or more, and may be 70 mass% or more. Specific examples of the polypropylene include the homopolymers such as amorphous polypropylene and crystalline polypropylene, copolymers such as a propylene-diene monomer copolymer, and the halogen-modified products such as chlorinated polypropylene.

The ethylene-propylene copolymer is a polymer containing the ethylene unit and th e propylene unit, and may contain only the ethylene unit and the propylene unit, or may furth er contain other monomer units in addition to the ethylene unit and the propylene unit. Exam ples of the ethylene-propylene copolymer containing other monomer units include an ethylen e-propylene-diene monomer copolymer. A total amount of ethylene units and propylene units in the ethylene-propylene copolymer is preferably 50 mass% or more, more preferably 70 m ass% or more, still more preferably 80 mass% or more, and particularly preferably 90 mass% or more, and may be 100 mass%.

The polyolefin includes, in addition to a physical blend including a plurality of co mponents of these resins, a reaction blend obtained by reacting functional groups between dif ferent polymers in a molding machine, a graft copolymer or a block copolymer including a pl urality of segments, a composition obtained by microdispersing a physical blend using them as compatibilizers, and the like.

In all the monomer units contained in the polyolefin, a total amount of the ethylene unit and the propylene unit is preferably 50 mass% or more, more preferably 70 mass% or m ore, still more preferably 80 mass% or more, and particularly preferably 90 mass%, and may be 100 mass%. A mass ratio of the ethylene unit to the propylene unit (ethylene unit /propylene unit) contained in the polyolefin is preferably 10/90 to 40/60, and more preferably 15/85 to 35/65. When the mass ratio of the ethylene unit is equal to or more than the lower li mit value of this range, the thermocompression bonding properties of the acid-modified poly olefin is improved, and the adhesive strength can be improved. When the mass ratio of the et hylene unit is equal to or less than the upper limit value of this range, the adhesive strength at a high temperature can be improved. By setting the mass ratio of the ethylene unit to the pro pylene unit within the above range, it is possible to achieve both the adhesion durability at a high temperature and the adhesion durability at a low temperature. Note that when the polyol efin is the polymer blend of polyethylene and polypropylene, "the mass ratio of the ethylene unit to the propylene unit contained in the polyolefin" means the mass ratio of the ethylene u nit to the propylene unit in all the ethylene units and the propylene units contained in the pol yethylene and the polypropylene.

The mass ratio of the ethylene unit to the propylene unit is determined from an abs orbance ratio of characteristic absorption of polyethylene ($719 \ cm^{-1}$) and characteristic absor ption of polypropylene ($1167 \ cm^{-1}$) in an IR spectrum. Specifically, a calibration curve for c onverting the absorbance ratio of the ethylene unit to the propylene unit into the mass ratio is used. The calibration curve can be prepared by blending commercially available polyethylen e and polypropylene at various ratios and plotting the blending ratio and the absorbance ratio.

The polyethylene, the polypropylene, and the ethylene-propylene copolymer may c ontain monomer units other than ethylene units and propylene units. Examples of other mono mers that form the monomer units other than ethylene units and propylene units include α-ole fins such as 1-butene, 1-pentene, 1-hexene, and 4-methyl-1-pentene, diene-based monomers such as butadiene, isoprene, and chloroprene, unsaturated carboxylic acids and derivatives th ereof such as vinyl acetate, acrylic acid ester, acrylic acid, methacrylic acid, and methacrylic acid ester, and aromatic vinyl compounds such as styrene. The content of the monomer units other than ethylene units and propylene units in the polyolefin is preferably 30 mass% or less , more preferably 20 mass% or less, and particularly preferably 10 mass% or less. When the content of the monomer units other than ethylene units and propylene units is in such a range , characteristics such as water resistance, chemical resistance, and durability of the polyolefin are enhanced, and the polyolefin can be produced at low cost.

The method for producing the polyolefin includes a known production method usin g the polymerization catalyst. The polymerization catalyst includes the Ziegler catalyst and t he metallocene catalyst, and the polymerization method includes the slurry polymerization an d the gas phase polymerization. An impact-resistant polypropylene referred to as a polypropy lene block polymer is substantially a mixture of polypropylene and a propylene-ethylene ran dom copolymer, and can be produced by a process including a first step of obtaining a homo polymer of propylene and a second step of obtaining a propylene-ethylene random copolyme r.

The acid compound used when acid-modifying the polyolefin, a method and condit ions of acid modification, and an acid modification amount are as described in description of the primer layer, and the description is omitted here.

The weight average molecular weight (Mw) of the acid-modified polyolefin contai ned in the adhesive layer is preferably 50,000 to 1,000,000, more preferably 100,000 to 750, 000, and still more preferably 150,000 to 500,000.

In the adhesive layer, the melting point of the acid-modified polyolefin is preferabl y 130°C or higher, and more preferably 135°C or higher. When the melting point of the acid-modified polyolefin is in such a range, the heat resistance of the adhesive layer and the adhes ive strength at a high temperature can be improved.

In the adhesive layer, the melting point of the acid-modified polyolefin is preferabl y 160°C or lower, and more preferably 150°C or lower. When the melting point of the acid-modified polyolefin is in such a range, good thermocompression bonding properties can be o btained, and the adhesion durability at a low temperature can be improved.

Melt flow rate of the acid-modified polyolefin is preferably 3 g/10min or more, and more preferably 7 g/10min or more. The melt flow rate of the acid-modified polyolefin is pr eferably 50 g/10min or less, and more preferably 30 g/10min or less.

Melt flow rate of the adhesive layer is a value measured in accordance with JIS K7 210:2014 (ISO 1133 2011). The melt flow rate of the adhesive layer is measured at a resin te mperature of 230°C and a load of 2.16 kg.

The content of the acid-modified polyolefin in the adhesive layer may be 2 mass% or more with respect to a total amount of the adhesive layer. For example, the acid-modified polyolefin may be used by being mixed with the unmodified polyolefin, and when an acid-modified polyolefin having a high degree of acid modification is used, it may be used in an amount as small as about 2 mass% with respect to the total amount of the adhesive layer. In one embodiment, the content of the acid-modified polyolefin in the adhesive layer is preferably 30 mass% or more, more preferably 70 mass% or more, and particularly preferably 90 mass% or more, and may be 100 mass% with respect to the total amount of the adhesive layer.

A polymer (hereinafter, referred to as other polymer C) other than the acid-modified polyolefin can be added to the adhesive layer for the purpose of improving adhesive strength at low temperature, adhesion durability, molding stability, and improving adhesiveness with the substrate layer, and the like. Examples of the other polymer C include styrene-based block copolymers such as a styrene-butadiene-styrene block copolymer and a hydrogenated product thereof, a styrene-isoprene-styrene block copolymer and a hydrogenated product thereof, a styrene-isobutylene-styrene block copolymer, and a styrene-based graft copolymer obtained by grafting a styrene homopolymer or a copolymer to the polyolefin. In addition, the unmodified polyolefin such as polyethylene, polypropylene, or an ethylene-propylene copolymer may be added as the other polymer C.

When the other polymer C is used, the lower limit of the content of the other polymer C in the adhesive layer is preferably 1 mass% or more, more preferably 2 mass% or more, and particularly preferably 3 mass% or more. When the addition amount is in such a range, the improving effect by the other polymer C is enhanced.

When the other polymer C is used, the upper limit of the content of the other polymer C in the adhesive layer is preferably 50 mass% or less, more preferably 30 mass% or less, and particularly preferably 10 mass% or less. When the addition amount is in such a range, the adhesive layer can obtain high heat resistance and high adhesive strength at a high temperature. As described above, when the acid-modified polyolefin having a high degree of acid modification is used, the content of the acid-modified polyolefin can be reduced. In such a case, the content of the unmodified polyolefin may be high, and the upper limit of the content of the unmodified polyolefin in the adhesive composition may be 98 mass%.

A crosslinkable resin may be added to the adhesive layer, but it is preferable that a small amount or no crosslinkable resin is present in the adhesive layer. When the amount of the crosslinkable resin is small, crystallinity of the acid-modified polyolefin is increased, and the heat resistance and the hydrolysis resistance are improved. When the amount of the crosslinkable resin is small, an excessive increase in molecular weight due to crosslinking formation can be suppressed, and moldability of the adhesive layer is improved. The content of the crosslinkable resin in the adhesive layer is preferably less than 3 mass%, more preferably less than 1 mass%, particularly preferably less than 0.5 mass%, and may be 0 mass%. The crosslinkable resin can crosslink the main component of the adhesive layer, and examples thereof include resins having a plurality of functional groups such as a phenol novolac-modified epoxy resin, an oxazoline group-containing styrene resin, and an epoxy group-containing polyolefin resin.

The adhesive layer may further contain an additive selected from the group consisting of an antioxidant, an ultraviolet absorber, a filler, reinforcing fibers, a mold release agent, a processing aid, a flame retardant, a plasticizer, a nucleating agent, an antistatic agent, a pigment, a dye, a foaming agent, and combinations thereof.

The substrate layer preferably has a thickness within a range of 10 $\mu$m to 300 $\mu$m, more preferably has a thickness within a range of 30 $\mu$m to 250 $\mu$m, and particularly preferably has a thickness within a range of 50 $\mu$m to 200 $\mu$m. When thickness of the substrate layer is this lower limit value or more, sufficient rigidity can be obtained. When the thickness of the substrate layer is this upper limit value or less, influence on the thickness of the fuel cell incorporating the gasket member can be reduced.

The primer layer preferably has a thickness within a range of 1 $\mu$m to 20 $\mu$m, more preferably has a thickness within a range of 5 $\mu$m to 20 $\mu$m, and particularly preferably has a thickness within a range of 10 $\mu$m to 20 $\mu$m. When the thickness of the primer layer is this lower limit value or more, sufficient adhesiveness is obtained. When the thickness of the primer layer is this upper limit value or less, the influence on the thickness of the fuel cell incorporating the gasket member can be reduced.

The adhesive layer preferably has a thickness within a range of 10 $\mu$m to 200 $\mu$m, more preferably has a thickness within a range of 20 $\mu$m to 150 $\mu$m, and particularly preferably has a thickness within a range of 30 $\mu$m to 100 $\mu$m. When the thickness of the adhesive layer is this lower limit value or more, occurrence of adhesion failure can be suppressed. When the thickness of the adhesive layer is this upper limit value or less, it is possible to prevent the adhesive from protruding from the gasket member, and to prevent occurrence of failure of the fuel cell incorporating the gasket member.

By controlling the thickness of each layer of the gasket member within such a range, the gasket member and the bonded body using the gasket member can exhibit excellent adhesion performance, durability, productivity, and economy.

A total thickness of the gasket member is preferably 30 $\mu$m to 400 $\mu$m, more preferably 50 $\mu$m to 350 $\mu$m, and particularly preferably 50 $\mu$m to 300 $\mu$m.

Note that in the present disclosure, the thickness of the gasket member and each layer constituting the gasket member is an arithmetic mean value of thicknesses at three portions obtained by preparing a slice having a section perpendicular to the main surface of the gasket member and measuring it using a digital microscope VHS-8000 (manufactured by KEYENCE CORPORATION).

Each of the substrate layer and the adhesive layer is generally produced from a resi n composition as a raw material. Resin compositions as raw materials of the substrate layer a nd the adhesive layer are respectively compositions containing constituent components of the substrate layer and the adhesive layer described above and containing a resin as the main co mponent.

The resin composition for forming the substrate layer and the adhesive layer can be produced, for example, by a method in which the resin as the main component and, if necess ary, other components are melt-kneaded with an extruder, a Banbury mixer, a heat roll, or the like, a strand extruded from a nozzle hole of a die head is cooled and solidified with water or the like while being pulled, and the strand is cut into pellets.

Temperature of melt-kneading of the resin composition to be used for the substrate layer is preferably 150°C to 320°C, and more preferably 180°C to 300°C, and kneading time is usually 0.5 minutes to 20 minutes, and preferably 1 minute to 15 minutes.

The temperature of melt-kneading of the resin composition to be used for the adhes ive layer is preferably 150°C to 270°C, and more preferably 170°C to 250°C, and the kneadi ng time is usually 0.5 minutes to 20 minutes, and preferably 1 minute to 15 minutes.

The substrate layer and the adhesive layer can be obtained by molding the resin co mposition to be used for the substrate layer and the resin composition to be used for the adhe sive layer thus obtained into a film shape using a conventionally known method (for example , extrusion molding).

The primer layer is preferably formed on at least one surface side of the substrate la yer by a coating method. That is, the primer layer is preferably a coating layer. For example, the primer layer can be formed by dissolving or dispersing the above-described components of the primer layer in a solvent to prepare a primer layer forming composition, applying the p rimer layer forming composition onto the substrate layer using an application means, volatili zing the solvent to form a coated substrate layer, bonding the obtained coated substrate layer and the adhesive layer, and then curing the coating film.

Examples of the solvent include an organic solvent capable of dissolving or dispers ing the components of the primer layer.

Examples of the application means for the primer layer forming composition include a bar co ater, a spray gun, a dispenser, a roll coater, a curtain coater, and a dip coater.

Temperature and time for volatilizing the solvent can be appropriately set in consid eration of the type of the solvent and the like, and can be, for example, 50°C to 200°C and 0. 1 minutes to 5 minutes.

The gasket member according to the present disclosure has a stress at break of 50 N/mm$^2$ or more and an elongation at break of 50% or more. Thus, even in an environment at a high temperature and in the presence of moisture, the hydrolysis resistance is improved and the adhesion durability is excellent.

The stress at break is preferably 50 N/mm$^2$ or more, and more preferably 60 N/mm$^2$ or more. The upper limit value of the stress at break is, for example, 100 N/mm$^2$.

The elongation at break is preferably 50% or more, and more preferably 60% or more. The u pper limit value of the elongation at break is, for example, 1,000%.

A method for measuring the stress at break and the elongation at break is as described above.

The gasket member according to the present disclosure can be produced as follows. First, the coated substrate layer and the adhesive layer are prepared in advance.

Subsequently, a surface of the substrate layer on which the coating film is disposed and the a dhesive layer are opposed to each other, to obtain a multilayered laminate by thermal laminat ion.

Subsequently, the laminate is cured, and the coating film is cured, to obtain the gasket memb er.

The thermal lamination can be performed using a known laminator.

Lamination conditions are not limited, and general conditions can be applied.

Lamination temperature is preferably 50°C to 200°C, and more preferably 80°C to 150°C. Conveying speed during lamination is preferably 0.01 m/min to 200 m/min, and more prefera bly 0.1 m/min to 100 m/min.

Lamination pressure is preferably 0.01MPa to 10MPa, and more preferably 0.1MPa to 5MPa.

By curing the laminate after thermal lamination, curing of the coating film proceed s, and a gasket member in which the substrate layer, the primer layer, and the adhesive layer are more firmly bonded is obtained. As curing conditions, for example, the laminate may be allowed to stand under temperature conditions of 40°C to 150°C for 0.5 days to 7 days.

The gasket member according to the present disclosure can be bonded to an adhere nd formed of various materials such as metal, glass, ceramics, and plastic. Thus, the bonded body including the gasket member and the adherend can be prepared. For example, the bonde d body including the gasket member can be used as a member or a component of a layered ba ttery.

The metal used as the adherend may be a generally known metal plate, metal flat pl ate, or metal foil, and iron, copper, aluminum, lead, zinc, titanium, chromium, stainless steel, or the like can be used. Among them, iron, aluminum, titanium, and stainless steel are partic ularly preferable.

Various thermoplastic or thermosetting resins can be used for the plastic used as th e adherend. A composite material obtained by combining an inorganic substance such as glass or ceramics, a filler such as metal or carbon, or fibers with a resin may be used.

The gasket member according to the present disclosure is for the fuel cell, and is a gasket member disposed between an electrolyte membrane and a separator of the fuel cell. For example, in the gasket member according to the present disclosure, one adhesive layer is disposed on the electrolyte membrane side, and the other adhesive layer is disposed on the separator side.

[Examples]

Hereinafter, the present invention will be described more specifically with reference to Examples. However, the present disclosure is not limited to the following examples.

1. Substrate layer material

- Polyimide film (PI film):
  As the PI film, UPILEX 125RN (thickness: 125 $\mu$m, manufactured by UBE Corporation) was used.
- Polyphenylsulfone film (PPSU film):
  As the PPSU film, Radel R-5000 (manufactured by Solvay) was used, and a film having a thickness of 70 $\mu$m was prepared by a T-die extruder and used.

2. Primer layer material

<Main agent>

- Acid-modified polyolefin-1 (PO-1)
  Propylene-butene-1 copolymer, melting point: 70°C, molecular weight: Mw 100,000, maleic anhydride modification rate: 1.1 mass%
- Acid-modified polyolefin-2 (PO-2)
  Propylene-butene-1 copolymer, melting point: 80°C, molecular weight: Mw 90,000, maleic anhydride modification rate: 1.1 mass%
- Polycarbonate diol-1 (PD-1)
  Duranol T5650J (manufactured by Asahi Kasei Corporation)

<Curing agent>

- Isocyanate compound-1
  Duranate TPA-100 (manufactured by Asahi Kasei Corporation)
- Isocyanate compound-2
  Duranate T4900-70B (manufactured by Asahi Kasei Corporation)
- Epoxy compound-1
  EPICLON HP-7200 (manufactured by DIC Corporation)

<Additive X>

- Imidazole compound-1
  CUREZOL C11Z (manufactured by Shikoku Chemicals Corporation)
- Dioctyltin laurate
  Reagent (manufactured by FUJIFILM Wako Pure Chemical Corporation)

3. Adhesive layer material

- Using TM55 (manufactured by TOAGOSEI CO., LTD., Aronmelt (registered trademark) T M55, melting point: 142°C), a film having a thickness of 55 μm was prepared by the T-die e xtruder.

<Surface treatment of film>

- Substrate layer: A layer treated on both sides using a corona treatment machine (manufactur ed by Navitas Co., Ltd., Polydyne 1, discharge amount: 81.5 W·min/m$^2$ , 1 reciprocation) wa s used.
- Adhesive layer: A layer treated on one side (only a side to be bonded to the primer layer) us ing the corona treatment machine (manufactured by Navitas Co., Ltd., Polydyne 1, discharge amount: 81.5 W·min/m$^2$, 1 reciprocation) was used.

<Composition for forming primer layer>

As compositions for forming the primer layer, Primer 1 (P-1) to Primer 3 (P-3) wer e prepared as follows.
- Preparation of Primer 1 (P-1)
  67.0 g of polycarbonate diol-1 (PD-1) was dissolved in a mixed solvent of 33.0 g of toluene a nd 14.9 g of methyl ethyl ketone, and then 30.1 g of isocyanate compound-1 was dissolved th erein to obtain Primer 1 (P-1).

- Preparation of Primer 2 (P-2)
  14.9 g of acid-modified polyolefin-1 (PO-1) was dissolved in a mixed solvent of 36.2 g of m ethyl ethyl ketone and 50.8 g of methyl cyclohexane under heating at 60°C, and then 0.3 g of dioctyltin laurate, 2.4 g of isocyanate compound-1, and 2.4 g of isocyanate compound-2 wer e dissolved therein to obtain Primer 2 (PO-2).

|  | P-1 | P-2 | P-3 |
|---|---|---|---|
| Acid-modified polyolefin-1 |  | 14.9 |  |
| Acid-modified polyolefin-2 |  |  | 20.0 |
| Polycarbonate diol-1 | 67.0 |  |  |
| Isocyanate compound-1 | 30.1 | 2.4 |  |
| Isocyanate compound-2 |  | 2.4 |  |
| Epoxy compound-1 |  |  | 2 |
| Dioctyltin laurate |  | 0.3 |  |
| Imidazole compound-1 |  |  | 0.03 |
| Toluene | 33.0 |  | 35.5 |
| Methyl ethyl ketone | 14.9 | 36.2 | 8.3 |
| Methylcyclohexane |  | 50.8 | 82.9 |

- Preparation of Primer 3 (P-3)

20.0 g of acid-modified polyolefin-2 (PO-2) was dissolved in a mixed solvent of 35.5 g of tol uene, 8.3 g of methyl ethyl ketone, and 82.9 g of methyl cyclohexane under heating at 60°C, and then 2.0 g of epoxy compound-1 and 0.03 g of imidazole compound-1 were dissolved th erein to obtain Primer 3 (PO-3).
Compositions of Primer 1 (P-1) to Primer 3 (P-3) are summarized in Table 1 below . In Table 1, P-1 to P-3 respectively correspond to Primer 1 (P-1) to Primer 3 (P-3). The unit of composition is "g".

[Table 1]

(Example 1)

Primer 1 (P-1) was applied to one side of a polyimide film (PI, thickness 125 $\mu$m) with a bar coater so as to have a coating thickness of 10 $\mu$m (dry), and a solvent was volatiliz ed at 100°C for 1 minute to obtain a coated film (coated substrate layer). Thereafter, a coated surface of the obtained coated film was bonded to the TM55 (acid-modified polypropylene f ilm; thickness 55 $\mu$m) by thermal lamination (normal temperature (23°C), 0.3 m/min, 0.3MP a). Primer 1 (P-1) was similarly applied to an unapplied surface of the PI film, and the film w as bonded to the TM55 to obtain a laminate. Subsequently, the obtained laminate was cured a t 60°C for 2 days to cure the coating film, resulting in a gasket member (thickness 255 $\mu$m) i n which the adhesive layer (thickness 55 $\mu$m)/the primer layer (thickness 10 $\mu$m)/the substrat e layer (thickness 125 $\mu$m)/the primer layer (thickness 10 $\mu$m)/the adhesive layer (thickness 5 5 $\mu$m) were laminated in this order.

(Example 2)

Primer 2 (P-2) was applied to one side of a polyimide film (PI, thickness 125 $\mu$m) with a bar coater so as to have a coating thickness of 10 $\mu$m (dry), and the solvent was volatilized at 100°C for 1 minute to obtain a coated film (coated substrate layer). Thereafter, a coated surface of the obtained coated film was bonded to the TM55 (acid-modified polypropylene film; thickness 55 $\mu$m) by thermal lamination (100°C, 0.3 m/min, 0.3MPa). Primer 2 (P-2) was similarly applied to an unapplied surface of the PI film, and the film was bonded to the TM55 to obtain a laminate. Subsequently, the obtained laminate was cured at 100°C for 4 days to cure the coating film, resulting in a gasket member (thickness 255 $\mu$m) in which the adhesive layer (thickness 55 $\mu$m)/the primer layer (thickness 10 $\mu$m)/the substrate layer (thickness 125 $\mu$m)/the primer layer (thickness 10 $\mu$m)/the adhesive layer (thickness 55 $\mu$m) were laminated in this order.

(Example 3)

Primer 3 (P-3) was applied to one side of a polyimide film (PI, thickness 125 $\mu$m) with a bar coater so as to have a coating thickness of 10 $\mu$m (dry), and the solvent was volatil ized at 100°C for 1 minute to obtain a coated film (coated substrate layer). Thereafter, a coat ed surface of the obtained coated film was bonded to the TM55 (acid-modified polypropylen e film; thickness 55 $\mu$m) by thermal lamination (100°C, 0.3 m/min, 0.3MPa). Primer 3 (P-3) was similarly applied to an unapplied surface of the PI film, and the film was bonded to the T M55 to obtain a laminate. Subsequently, the obtained laminate was cured at 80°C for 2 days t o cure the coating film, resulting in a gasket member (thickness 255 $\mu$m) in which the adhesi ve layer (thickness 55 $\mu$m)/the primer layer (thickness 10 $\mu$m)/the substrate layer (thickness 1 25 $\mu$m)/the primer layer (thickness 10 $\mu$m)/the adhesive layer (thickness 55 $\mu$m) were laminat ed in this order.

(Comparative Example 1)

A gasket member (thickness 200 $\mu$m) was obtained in the same manner as in Exam ple 1 except that the polyimide film was changed to a polyphenylsulfone film (PPSU, thickne ss 70 $\mu$m).

(Comparative Example 2)

A gasket member (thickness 200 $\mu$m) was obtained in the same manner as in Exam ple 2 except that the polyimide film was changed to a polyphenylsulfone film (PPSU, thickne ss 70 $\mu$m).

(Comparative Example 3)

A gasket member (thickness: 200 $\mu$m) was obtained in the same manner as in Exa mple 3 except that the polyimide film was changed to a polyphenylsulfone film (PPSU, thick ness 70 $\mu$m).

For the polyimide films used in Examples 1 to 3 and the polyphenylsulfone films u sed in Comparative Examples 1 to 3, the retention rate of elongation at break and the retentio n rate of stress at break were measured. The results are shown in Table 2.

<Retention rate of elongation at break and retention rate of stress at break>

The stress at break (initial stress at break) and the elongation at break (initial elong ation at break) of the PI film and the PPSU film were measured. Further, the PI film and the PPSU film were immersed in water at 120°C and held for 3000 hours, and then the stress at b reak and the elongation at break were measured. The obtained measured values were divided by the initial stress at break and the initial elongation at break to calculate the retention rate o f stress at break and the retention rate of elongation at break. The stress at break and the elon gation at break were measured by punching the film into a No. 3 dumbbell shape described i n JIS K 6251 and pulling it under the conditions of a tensile speed of 30 mm/min and a gauge length of 20 mm using the tensile tester. The test environment was set to 23°C, and the avera ge value of two measurements was adopted.

Retention rate of stress at break (%) = (stress at break after water-immersion at 120°C for 30 00 hours ÷ initial stress at break) × 100 Retention rate of elongation at break (%) = (elongation at break after water-immersion at 120 °C for 3000 hours ÷ initial elongation at break) × 100

[Table 2]

(Evaluation)

Using the obtained gasket members of Examples 1 to 3 and Comparative Examples 1 to 3, the following measurement and evaluation were performed.

|  |  | Initial | After holding in water at 120°C for 3000 hours | Retention rate (%) |
|---|---|---|---|---|
| PI film | Stress at break (N/mm$^2$) | 175 | 160 | 92 |
|  | Elongation at break (%) | 77 | 62 | 81 |
| PPSU film | Stress at break (N/mm$^2$) | 60 | 66 | 109 |
|  | Elongation at break (%) | 46 | 22 | 48 |

<Stress at break and elongation at break>

The stress at break and the elongation at break were measured by punching the film into a No. 3 dumbbell shape described in JIS K 6251 and pulling it under the conditions of a tensile speed of 30 mm/min and a gauge length of 20 mm using the tensile tester. The test en vironment was set to 23°C, and the average value of two measurements was adopted. The res ults are shown in Table 3.

<Initial peeling strength>

Initial peeling strength was measured by a hot water peeling test described below. A SUS304 plate having a thickness of 0.1 mm was used as the adherend, and the gasket mem bers produced in Examples and Comparative Examples were sandwiched between SUS304 p lates and thermocompression-bonded (180°C, 3 seconds, 1MPa) with a precision pressing ma chine to prepare a bonded body. This bonded body was cut into a strip shape having a width of 10 mm to obtain a test piece. An adhesive portion of the test piece had a width of 10 mm a nd a length of 15 mm. In the hot water peeling test, a load cell (manufactured by IMADA Co ., Ltd., eDPU-50N) was attached to a measuring stand (manufactured by IMADA Co., Ltd., MX2-1000 N), hot water of 95°C was filled in a heating water tank having a bottom attached with a hook, and the test piece was peeled at 30 mm/min in a state of being immersed therei n, to measure the initial peeling strength (N/mm). The results are shown in Table 3.

<Adhesion durability in water>

In order to evaluate the adhesion durability at a high temperature and in water, the t est piece prepared above was put into a pressure-resistant container containing pure water, he ated in an oven at 120°C together with the pressure-resistant container, held for 500 hours, th en taken out from the pressure-resistant container, and subjected to the above-mentioned hot water peeling test, to measure the peeling strength (N/mm). The obtained results were evalua ted according to the following evaluation criteria. The results are shown in Table 3.

[Evaluation Criteria]

A: The peeling strength after immersion for 500 hours is 0.65 N/mm or more.
B: The peeling strength after immersion for 500 hours is 0.50 N/mm or more and less than 0. 65 N/mm.
C: The peeling strength after immersion for 500 hours is 0.40 N/mm or more and less than 0. 50 N/mm.
D: The peeling strength after immersion for 500 hours is less than 0.40 N/mm.

[Table 3]

| | Substrate layer | Primer layer | Adhesive layer | Stress at break (N/mm2) | Elongation at break (%) | Peeling strength (N/mm) | | Adhesion durability Evaluation |
| --- | --- | --- | --- | --- | --- | --- | --- | --- |
| | | | | | | Initial | After holding in water at 120°C for 500 hours | |
| Example 1 | PI film | P-1 | TM55 | 79.2 | 74.5 | 0.57 | 0.55 | B |
| Example 2 | PI film | P-2 | TM55 | 89.7 | 93.9 | 1.19 | 0.69 | A |
| Example 3 | PI film | P-3 | TM55 | 75.3 | 64.8 | 1.23 | 0.76 | A |
| Comparative Example 1 | PPSU film | P-1 | TM55 | 30.5 | 155.1 | 0.7 | 0.45 | C |
| Comparative Example 2 | PPSU film | P-2 | TM55 | 31.8 | 177.4 | 1.31 | 0.43 | C |
| Comparative Example 3 | PPSU film | P-3 | TM55 | 29.9 | 143.9 | 1.1 | 0.39 | D |

In Table 3, P-1 to P-3 respectively correspond to Primer 1 (P-1) to Primer 3 (P-3).

As shown in Table 3, it can be seen that the gasket member of Example in which th e substrate layer contains polyimide, the stress at break is 50 N/mm$^2$ or more, and the elongat ion at break is 50% or more has excellent adhesion durability in an environment at a high te mperature and in the presence of moisture, as compared with Comparative Examples in whic h the substrate layer does not contain polyimide.

Note that the disclosure of Japanese Patent Application No. 2023-111758 filed on J uly 6, 2023 is incorporated herein by reference in its entirety. In addition, all literatures, pate nt applications, and technical standards described in the present specification are incorporate d herein by reference to the same extent as when each literature, patent application, and techn ical standard were specifically and individually described to be incorporated by reference.

**Claims**

1. A gasket member for a fuel cell, the gasket member comprising a substrate layer an d adhesive layers arranged on both sides of the substrate layer, wherein the substrate layer co mprises polyimide, and has a stress at break of 50 N/mm$^2$ or more and an elongation at break of 50% or more.

2. The gasket member for a fuel cell according to claim 1, wherein the substrate layer has a retention rate of elongation at break of 50% or more after being held in water at 120°C for 3000 hours.

3. The gasket member for a fuel cell according to claim 1 or 2, wherein the substrate l ayer has a retention rate of stress at break of 100% or less after being held in water at 120°C for 3000 hours.

4. The gasket member for a fuel cell according to claim 1 or 2, wherein a primer layer is further disposed between the substrate layer and the adhesive layer.

## INTERNATIONAL SEARCH REPORT

| International application No. |
| --- |
| **PCT/JP2024/023660** |

### A. CLASSIFICATION OF SUBJECT MATTER

*H01M 8/0284*(2016.01)i; *F16J 15/10*(2006.01)i; *H01M 8/10*(2016.01)i; *H01M 8/0276*(2016.01)i
FI:   H01M8/0284; H01M8/0276; F16J15/10 X; H01M8/10 101

According to International Patent Classification (IPC) or to both national classification and IPC

### B. FIELDS SEARCHED

Minimum documentation searched (classification system followed by classification symbols)

H01M8/0284; F16J15/10; H01M8/10; H01M8/0276

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2001-196082 A (HONDA MOTOR CO., LTD.) 19 July 2001 (2001-07-19) paragraphs [0012]-[0015], fig. 4 | 1-4 |
| X | JP 2008-507107 A (PEMEAS GMBH) 06 March 2008 (2008-03-06) paragraphs [0204]-[0212] | 1-4 |
| A | CN 112838253 A (DALIAN INST CHEM & PHYSICS CAS) 25 May 2021 (2021-05-25) claims | 1-4 |
| A | US 6861171 B1 (FREUDENBERG-NOK GENERAL PARTNERSHIP) 01 March 2005 (2005-03-01) entire text | 1-4 |

☐ Further documents are listed in the continuation of Box C.     ☑ See patent family annex.

* Special categories of cited documents:
"A"   document defining the general state of the art which is not considered to be of particular relevance
"D"   document cited by the applicant in the international application
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| **12 September 2024** | **24 September 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/023660**

| Patent document cited in search report | | | Publication date (day/month/year) | Patent family member(s) | Publication date (day/month/year) |
|---|---|---|---|---|---|
| JP | 2001-196082 | A | 19 July 2001 | (Family: none) | |
| JP | 2008-507107 | A | 06 March 2008 | US 2007/0248889 A1 paragraphs [0239]-[0246] WO 2006/008158 A2 EP 1771906 A1 DE 102004035309 A1 KR 10-2007-0046128 A CN 101023546 A | |
| CN | 112838253 | A | 25 May 2021 | (Family: none) | |
| US | 6861171 | B1 | 01 March 2005 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022172983 A
- WO 2022172985 A

- JP 2023111758 A